# FASCICULE DE BREVET EUROPEEN

(11) **EP 2 371 120 B1**
(45) Date de publication et mention de la délivrance du brevet: **26.02.2020**
(21) Numéro de dépôt: 09796678.2
(22) Date de dépôt: 14.12.2009
(51) Int. Cl.: H04N 21/4367, H04N 21/442, H04N 21/4623

(54) **PROCÉDÉS DE TRANSMISSION, DE RÉCEPTION ET D'IDENTIFICATION, PROCESSEUR DE SÉCURITÉ ET SUPPORT D'ENREGISTREMENT D'INFORMATIONS POUR CES PROCÉDÉS**
VERFAHREN ZUM SENDEN, EMPFANGEN UND IDENTIFIZIEREN, SICHERHEITSPROZESSOR UND INFORMATIONSAUFZEICHNUNGSMEDIUM FÜR DIE VERFAHREN
TRANSMISSION, RECEPTION AND IDENTIFICATION METHODS, SECURITY PROCESSOR AND INFORMATION RECORDING MEDIUM FOR SAID METHODS

(30) Priorité: 31.12.2008 FR 0807518
(43) Date de publication de la demande: 05.10.2011
(73) Titulaire: Viaccess, 92057 Paris La Défense (FR)
(72) Inventeur: CHIEZE, Quentin, F-75009 Paris (FR); LEPORINI, David, F-94150 Rungis (FR)
(74) Mandataire: Colombo, Michel
(86) Numéro de dépôt international: PCT/EP2009/067025
(87) Numéro de publication internationale: WO 2010/076163

(56) Documents cités:
- EP-A1- 1 742 474
- WO-A1-96/06504
- WO-A1-99/57901
- WO-A2-2004/014075
- FR-A1- 2 866 772
- FRANCIS; SIRETT; MAYES; MARKANTONAKIS: "Countermeasures for attacks on satellite TV cards using open receivers" AUSTRALASIAN INFORMATION SECURITY WORKSHOP.: DIGITAL RIGHTSMANAGEMENT, XX, XX, 6 novembre 2004 (2004-11-06), pages 1-6, XP002333719

## Description

L'invention concerne un procédé de transmission d'une donnée supplémentaire par un processeur de sécurité vers un équipement externe. L'invention concerne également :
- un procédé de réception de la donnée supplémentaire ainsi transmise,
- un procédé d'identification d'un processeur de sécurité utilisant ce procédé de transmission, et
- un procédé de transmission d'une donnée supplémentaire d'un équipement externe vers un processeur de sécurité.

Enfin, l'invention concerne un processeur de sécurité et un support d'enregistrement d'informations pour la mise en œuvre de ces procédés.

Un processeur de sécurité est un composant apte à réaliser des traitements de protection d'un système, notamment des opérations cryptographiques telles que des opérations de chiffrement ou de déchiffrement, et de mémorisation des données sensibles. A ce titre, ce composant est lui-même particulièrement sécurisé pour rendre difficile toute tentative de cryptanalyse. Le processeur de sécurité est raccordé à un ou plusieurs équipements externes qui sont donc moins sécurisés contre les tentatives de cryptanalyse. Ces équipements externes lui fournissent donc des données à traiter telles que des cryptogrammes. Le processeur de sécurité traite ces données puis transmet le résultat de ce traitement aux équipements externes. On comprend donc que l'analyse du fonctionnement de ces équipements externes ne donne pas d'informations sur les opérations cryptographiques réalisées par le processeur de sécurité.

Le processeur de sécurité et l'équipement externe communiquent en s'échangeant des trames d'informations par l'intermédiaire d'une interface de communication. Une trame d'informations se compose d'une succession de bits. Typiquement, la transmission des trames entre le processeur de sécurité et l'équipement externe est asynchrone. Ainsi, une trame d'informations se compose d'un motif particulier de bits signalant le début de la trame et d'un autre motif particulier de bits signalant la fin de la trame. La structure de cette trame est généralement définie par une norme. Le respect de cette norme du côté du processeur de sécurité et de l'équipement externe rend possible l'échange d'informations entre ces deux entités au travers de l'interface normalisée. Cette norme définit la position des champs contenus dans la trame ainsi que le codage utilisé pour transmettre les bits d'informations composant la trame. Par exemple, l'interface entre le processeur de sécurité et l'équipement externe auquel il est directement raccordé est conforme à la norme ISO 7816.

Le processeur de sécurité peut être incorporé de façon inamovible à l'intérieur d'un équipement externe. Dans ce cas, on parle de processeur de sécurité « enfoui ». Le processeur de sécurité se présente alors par exemple sous la forme d'un composant matériel dédié à ces fonctions. Le processeur de sécurité est souvent également simplement connecté de façon amovible à un équipement externe. Dans ce cas, il se présente souvent sous la forme d'une carte à puce.

L'équipement externe peut être l'équipement auquel le processeur de sécurité est directement raccordé ou tout équipement, extérieur au processeur de sécurité, avec lequel le processeur de sécurité échange des informations. Dans ce dernier cas, il n'est pas nécessaire que l'équipement externe soit directement raccordé au processeur de sécurité. Par exemple, l'équipement externe peut être raccordé au processeur de sécurité par l'intermédiaire d'autres équipements externes.

Il existe des situations où il est souhaitable d'échanger une donnée supplémentaire entre le processeur de sécurité et un équipement externe auquel il est raccordé, sans modifier le contenu de la trame d'informations transmise ni sa structure. Par exemple, une des raisons pour procéder ainsi est de transmettre une donnée supplémentaire de façon furtive, c'est-à-dire de façon quasiment indécelable par une personne malveillante qui écouterait et analyserait les échanges d'informations entre le processeur de sécurité et cet équipement externe. En effet, une telle personne extrait et analyse le contenu des trames d'informations conformément à ce qui est prévu par la norme. Dès lors, si la donnée supplémentaire est transmise sans modifier ni la structure de la trame ni son contenu, il y a peu de chance que cette personne détecte la transmission de cette donnée supplémentaire. On dit alors que la donnée supplémentaire est transmise sur un canal caché ou canal subliminal. De l'art antérieur, on connaît aussi, le document WO9606504 qui décrit un système de contrôle d'accès à carte à puce;
le document FR2866772 qui décrit un procédé d'appariement d'un terminal récepteur avec une pluralité de cartes de contrôle d'accès;
ainsi que le document EP1742474 qui décrit un dispositif de contrôle à des données chiffrées.

L'invention vise donc à transmettre une donnée de façon furtive entre un processeur de sécurité et un équipement externe raccordés l'un à l'autre par l'intermédiaire d'une liaison asynchrone de transmission d'informations.

Elle a donc pour objet un procédé de transmission d'une donnée supplémentaire d'un processeur de sécurité vers un équipement externe, dans lequel la transmission de la donnée supplémentaire est réalisée en retardant le début d'une transmission d'une trame d'informations, du processeur de sécurité vers l'équipement externe, d'un délai fonction de cette donnée supplémentaire.

Le procédé ci-dessus permet de transmettre la donnée supplémentaire sans modifier le contenu ou la structure des trames d'informations envoyées par le processeur de sécurité vers l'équipement externe. Il ne nécessite pas non plus la transmission de trames supplémentaires d'informations par rapport aux trames d'informations qui seraient de toute façon transmises. Il est donc difficile d'identifier comment est transmise la donnée supplémentaire. De plus, cela permet d'envoyer à l'équipement externe la donnée supplémentaire en plus de celles contenues dans la trame d'informations sans utiliser davantage de bande passante. En ce sens, ceci permet donc d'augmenter la bande passante globalement disponible pour la transmission d'informations entre le processeur de sécurité et l'équipement externe.

Enfin, l'élimination du canal caché ainsi créé est rendue difficile par le fait qu'il est difficile de supprimer les trames d'informations puisque celles-ci véhiculent des informations qui sont, par ailleurs, souvent nécessaires au bon fonctionnement d'un système sécurisé.

Les modes de réalisation de ce procédé de transmission peuvent comporter une ou plusieurs des caractéristiques des revendications dépendantes.

Ces modes de réalisation du procédé de transmission présentent en outre les avantages suivants :
- retarder les trames d'informations contenant les informations confidentielles déchiffrées par le processeur de sécurité rend l'élimination du canal caché plus difficile car ces trames d'informations peuvent difficilement être filtrées par une personne malveillante ;
- le tirage aléatoire du délai utilisé pour retarder le début de la transmission de la trame dans un groupe choisi en fonction de la valeur de la donnée supplémentaire rend encore plus difficile l'identification du canal caché ;
- la possibilité d'annuler une transmission permet d'inhiber certaines fonctionnalités du processeur de sécurité ;
- le fait de retarder la transmission de plusieurs trames d'informations d'un même délai permet ensuite, par un traitement statistique par l'équipement externe, de s'affranchir des aléas sur les temps de calcul et de transport de la trame d'informations ;
- l'absence de la donnée supplémentaire dans la trame d'informations retardée revient à une augmentation de la bande passante disponible entre le processeur de sécurité et l'équipement externe.

L'invention a également pour objet un procédé de réception par l'équipement externe de la donnée supplémentaire transmise par le processeur de sécurité à l'aide du procédé de transmission ci-dessus, dans lequel le procédé comporte l'obtention de la valeur de la donnée supplémentaire transmise à partir du délai utilisé pour retarder la trame d'informations.

Les modes de réalisation de ce procédé de réception peuvent comporter la caractéristique de la revendication 10.

L'invention a également pour objet un procédé d'identification d'un processeur de sécurité conforme à la revendication 11.

Ce procédé d'identification d'un processeur de sécurité est particulièrement efficace car il est difficile d'identifier comment le processeur de sécurité transmet des informations sur son identifiant à l'équipement externe.

Les modes de réalisation de ce procédé d'identification peuvent comporter la caractéristique de la revendication 12.

L'invention a également pour objet un procédé de transmission d'une donnée supplémentaire par un équipement externe vers un processeur de sécurité, dans lequel la transmission de la donnée supplémentaire est réalisée en retardant le début d'une transmission d'une trame d'informations de l'équipement externe vers le processeur de sécurité, d'un délai fonction de la valeur de la donnée supplémentaire.

L'invention a également pour objet un processeur de sécurité comportant un module de transmission d'une donnée supplémentaire vers un équipement externe. Ce module de transmission est apte à réaliser la transmission de la donnée supplémentaire en retardant le début d'une transmission d'une trame d'informations, du processeur de sécurité vers l'équipement externe, d'un délai fonction de la valeur de cette donnée 1 supplémentaire.

Enfin, l'invention a également pour objet un support d'enregistrement d'informations comportant des instructions pour l'exécution des procédés ci-dessus, lorsque ces instructions sont exécutées par un calculateur électronique.

L'invention sera mieux comprise à la lecture de la description qui va suivre, donnée uniquement à titre d'exemple non limitatif et faite en se référant aux dessins sur lesquels :
- la Figure1 est une illustration schématique d'un système de diffusion de contenu multimédia embrouillé,
- la Figure 2 est une illustration schématique d'une table d'écoute utilisée dans le système de la Figure 1,
- la Figure 3 est un organigramme d'un procédé d'identification d'un processeur de sécurité mis en œuvre dans le système de la Figure 1,
- les Figures 4 et 5 sont des chronogrammes illustrant un aspect particulier du procédé de la Figure 3,
- la Figure 6 est un graphe illustrant un exemple de contenu de la table d'écoute de la Figure 2 ;
- les Figures 7 et 8 sont des illustrations schématiques de deux trames d'informations transmises vers un processeur de sécurité du système de la Figure 1.

Dans ces figures, les mêmes références sont utilisées pour désigner les mêmes éléments.

Dans la suite de cette description, les caractéristiques et fonctions bien connues de l'homme du métier ne sont pas décrites en détail. De plus, la terminologie utilisée est celle des systèmes d'accès conditionnels à des contenus multimédias embrouillés. Pour plus d'informations sur cette terminologie, le lecteur peut se reporter au document suivant :

« Functional Model of Conditional Access System », EBU Review-Technical European Broadcasting Union, Bruxel, BE, n° 266, 21 Décembre 1995*.*

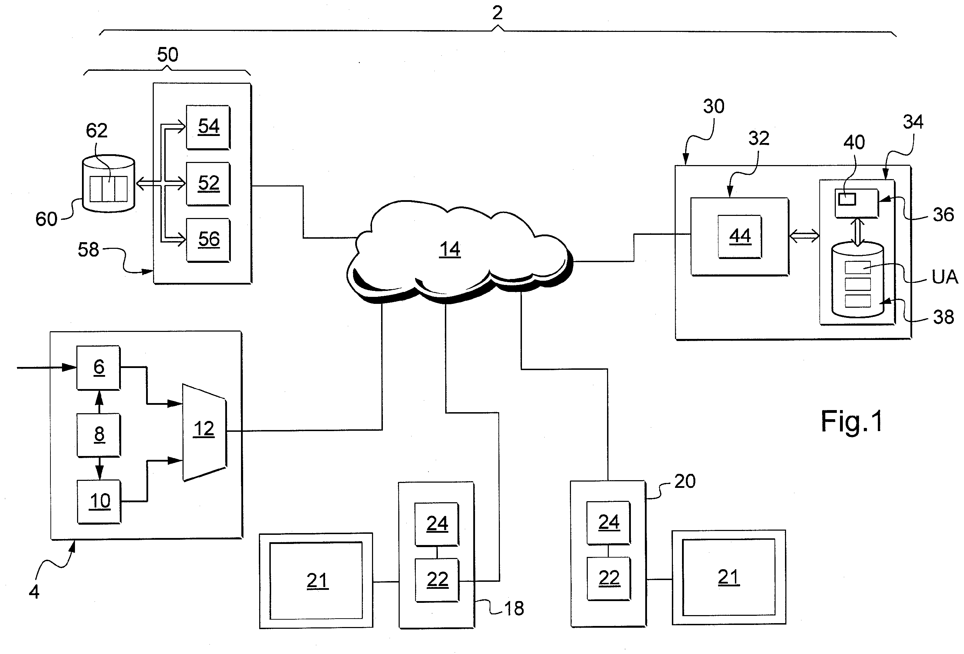

La Figure 1 représente un système 2 de diffusion de contenus multimédias embrouillés. Le contenu multimédia contient de la vidéo et/ou de l'audio. Par exemple, le contenu multimédia est un film ou une émission de télévision. Ces systèmes sont bien connus et seuls les éléments essentiels à la compréhension de ce qui va suivre sont décrits en détail.

Le système 2 comprend un émetteur 4 de contenus multimédias embrouillés. A cet effet, l'émetteur 4 comporte:
- un embrouilleur 6 propre à recevoir le contenu multimédia non embrouillé et à délivrer en sortie le contenu multimédia embrouillé à l'aide d'un mot de contrôle CW,
- un générateur 8 de mots de contrôle fournissant à l'embrouilleur 6 les mots de contrôle à utiliser, et
- un générateur 10 de messages ECM (Entitlement Control Message).

On rappelle ici simplement que les messages ECM comportent au moins un cryptogramme CW* du mot de contrôle CW utilisé pour embrouiller le contenu multimédia.

Le mot de contrôle est changé à intervalle régulier. L'intervalle de temps pendant lequel le mot de contrôle demeure inchangé est une cryptopériode. Classiquement, les cryptopériodes durent moins de 1 minute. Par exemple, la cryptopériode dure dix secondes.

Des sorties de l'embrouilleur 6 et du générateur 10 sont raccordées à des entrées respectives d'un multiplexeur 12. Le multiplexeur 12 multiplexe le contenu multimédia embrouillé avec les messages ECM générés pour obtenir un contenu multimédia multiplexé. Le contenu multimédia multiplexé est diffusé sur un réseau 14 de transmission d'informations. Par exemple, le réseau 14 est un réseau à commutation de paquets tel que le réseau Internet. Le réseau 14 peut aussi être constitué de plusieurs réseaux de type différent raccordés les uns aux autres. Par exemple, le réseau 14 peut être composé, pour une partie, d'un réseau satellitaire du type DVB-S et, pour une deuxième partie, du réseau Internet.

Le contenu multimédia mutliplexé ainsi diffusé est destiné à être reçu par des terminaux d'abonnés. Ces terminaux d'abonnés démultiplexent alors le contenu multimédia multiplexé pour obtenir, d'une part les messages ECM, et d'autre part le contenu multimédia embrouillé, et soumettent ensuite les messages ECM à leurs processeurs de sécurité associés, qui les traitent en fonction des droits d'accès préalablement obtenus et qu'ils mémorisent. Le cas échéant, ces processeurs de sécurité retournent ultérieurement le mot de contrôle CW déchiffré aux terminaux, qui peuvent ainsi désembrouiller le contenu multimédia avant de l'afficher en clair sur un écran. L'expression « en clair » indique que le contenu multimédia désembrouillé affiché sur l'écran est directement intelligible par un être humain.

Plutôt que de tels terminaux d'abonnés, seuls ont été représentés des terminaux « pirates » sur la Figure 1. Ces terminaux pirates sont utilisés pour afficher en clair le contenu multimédia sans s'acquitter de l'abonnement correspondant, donc sans obtenir les droits d'accès le permettant légitimement. Typiquement, ils obtiennent les mots de contrôle désembrouillés CW auprès d'un service, lui-même pirate, fourni sur le réseau. Sur la Figure 1, les deux terminaux pirates 18 et 20 représentés sont, par exemple, identiques. Ainsi, seul le terminal 18 est décrit plus en détail.

Le terminal 18 est raccordé à un écran 21 tel qu'un écran de télévision. Le terminal 18 est équipé :
- d'un décodeur 22 raccordé au réseau 14 pour recevoir le contenu multimédia multiplexé et diffusé par l'émetteur 4, et
- d'un désembrouilleur 24.

Le décodeur 22 démultiplexe le contenu multimédia afin d'en extraire le contenu multimédia embrouillé.

Le désembrouilleur 24 désembrouille ou déchiffre le contenu multimédia embrouillé en utilisant le mot de contrôle CW. Pour cela, ce désembrouilleur 24 doit recevoir le mot de contrôle CW en clair. A cette fin, le terminal 18 est raccordé à un dispositif 30 de partage de mot de contrôle. Par exemple, ici, le terminal 18 est raccordé au dispositif 30 par l'intermédiaire du réseau 14.

Le dispositif 30 est équipé d'un décodeur 32 et d'un processeur 34 de sécurité authentique directement raccordé au décodeur 32. Par « processeur de sécurité authentique » on désigne un processeur de sécurité qui a été obtenu légalement en contre partie d'un abonnement aux services de l'opérateur qui diffuse les contenus multimédias. Ce processeur 34 est donc structurellement identique à ceux contenus dans les terminaux d'abonnés. Les droits d'accès au contenu multimédia sont également régulièrement mis à jour dans le processeur 34 tant que le prix de l'abonnement est réglé. Cette mise à jour se fait comme pour les processeurs de sécurité connectés à des terminaux d'abonnés.

Le décodeur 32 démultiplexe le contenu multimédia multiplexé diffusé par l'émetteur 4 pour en extraire les messages ECM. Ces messages ECM sont alors transmis au processeur de sécurité 34 qui déchiffre alors le cryptogramme CW* pour obtenir le mot de contrôle CW. Ensuite, le processeur 34 transmet au décodeur 32 une trame d'informations contenant le mot de contrôle CW comme il l'aurait fait s'il était connecté à un terminal d'abonné.

Ici, le processeur de sécurité 34 est une carte à puce raccordée de façon amovible au décodeur 32 par l'intermédiaire d'une interface de communication conforme à la norme ISO 7816. Le décodeur 32 est donc un équipement externe vers lequel le processeur 34 transmet des données.

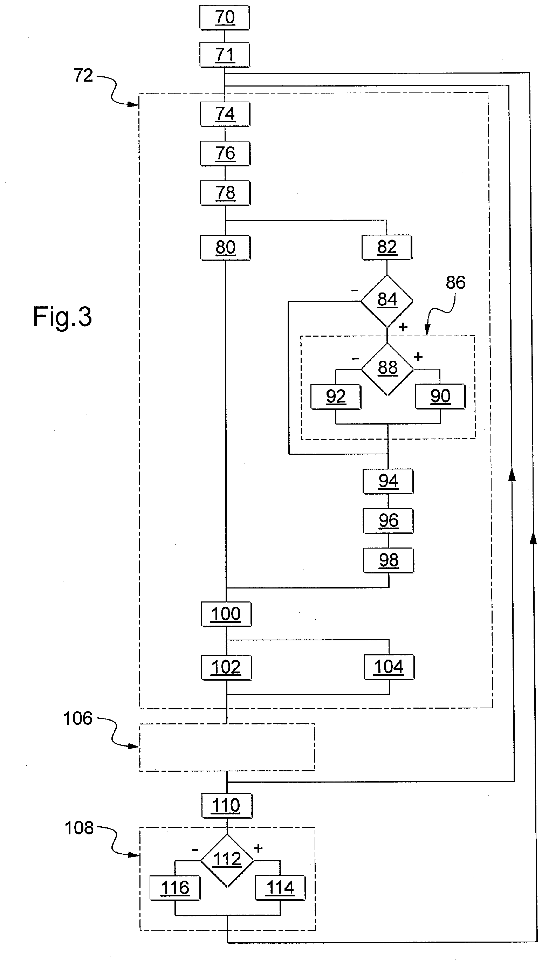

Le processeur 34 comprend un calculateur électronique 36 apte à exécuter des instructions enregistrées sur un support d'enregistrement d'informations. A cet effet, le calculateur 36 est raccordé à une mémoire 38 qui contient les instructions nécessaires à l'exécution du procédé de la figure 3. En particulier, ces instructions codent un module 40 de transmission de données supplémentaires sur un canal caché. La mémoire 38 comprend également :
- un identifiant UA du processeur de sécurité, et
- les clés cryptographiques et les titres d'accès nécessaires au déchiffrement des cryptogrammes CW*.

L'identifiant UA permet d'identifier de façon unique le processeur 34 parmi l'ensemble des processeurs de sécurité authentiques utilisés dans le système 2.

Contrairement aux terminaux d'abonnés, le décodeur 32 est équipé d'un diffuseur 44 de mots de contrôle. Ce diffuseur 44 diffuse le mot de contrôle transmis par le processeur 34 vers des équipements externes qui se sont inscrits, par exemple, dans une liste de diffusion maintenue par le dispositif 30. Les terminaux pirates 18 et 20 sont inscrits sur cette liste pour recevoir les mots de contrôles CW déchiffrés par le processeur 34. Ici, un poste 50 d'écoute est également inscrit dans cette liste et forme donc également un équipement externe auquel le processeur 34 transmet les mots de contrôle déchiffrés.

Le poste 50 est conçu pour écouter les informations diffusées par le dispositif 30 afin d'identifier le processeur 34 utilisé par ce dispositif 30. A cet effet, le poste 50 comprend :
- un module 52 de réception à la fois du contenu multimédia multiplexé diffusé par l'émetteur 4 et des mots de contrôle diffusés par le dispositif 30,
- un décodeur 54 propre à démultiplexer le contenu multimédia, et
- un module 56 de traitement pour obtenir les données transmises par le processeur 34 sur le canal caché.

Le module 52, le décodeur 54 et le module 56 sont typiquement des modules logiciels implémentés dans un ordinateur 58. Cet ordinateur 58 est raccordé à une mémoire 60. La mémoire 60 contient les instructions nécessaires pour l'exécution du procédé de la Figure 3 lorsqu'elles sont exécutées par l'ordinateur 58. Cette mémoire 60 comprend également une table 62 d'écoute.

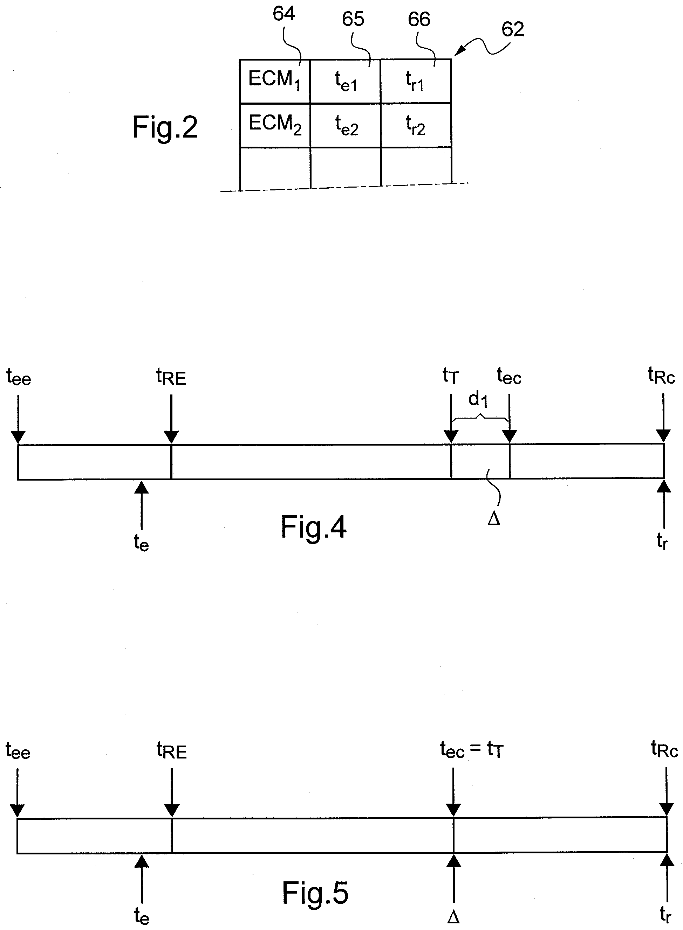

La Figure 2 représente plus en détail la table 62. La table 62 comprend trois colonnes 64 à 66. La première colonne 64 est destinée à contenir des identifiants de messages ECM. Par exemple, la colonne 64 contient des identifiants ECM₁ et ECM₂ de deux messages ECM différents.

La colonne 65 contient des instants tₑ d'émission des messages ECM identifiés par les identifiants contenus dans la colonne 64. Par exemple, ici, la colonne 65 contient les instants tₑ₁ et tₑ₂.

Enfin, la colonne 66 contient les instants tᵣ de réception des mots de contrôle CW diffusés par le dispositif 30. Par exemple, la colonne 66 contient les instants tᵣ₁ et tᵣ₂ associés respectivement aux identifiants ECM₁ et ECM₂.

Le fonctionnement du système 2 va maintenant être décrit plus en détail en regard du procédé de la Figure 3.

Initialement, lors d'une étape 70, le poste 50 s'abonne à la liste de diffusion du dispositif 30 pour recevoir les mots de contrôle déchiffrés et diffusés par ce dispositif.

Puis, lors d'une étape 71 le poste 50 construit l'instant tₑ d'émission par l'émetteur 4 du message ECM pour chaque cryptopériode. Par exemple, le poste 50 génère l'instant tₑ d'émission d'un message ECM dans chaque cryptopériode avec la même périodicité que celle utilisée pour émettre les messages ECM. En effet, les messages ECM sont émis périodiquement, généralement juste avant la fin de la cryptopériode précédente. Il n'est pas nécessaire que l'instant tₑ corresponde exactement à l'instant auquel l'émetteur 4 diffuse le message ECM. Il suffit que la suite des instants tₑ générés présente la même périodicité que celle utilisée pour émettre les messages ECM. Eventuellement, la périodicité d'émission des messages ECM est déduite de la périodicité avec laquelle sont reçus les mots de contrôle diffusés par le dispositif 30.

Ensuite, on procède à une phase 72 d'émission d'une requête d'identification du processeur 34 et de réception de la réponse correspondante. Plus précisément, lors d'une étape 74, le contenu multimédia embrouillé diffusé par l'émetteur 4 est multiplexé avec un message ECM₁ contenant une requête R₁. La requête R₁ cible un groupe restreint G₁ de processeurs de sécurité. Ce groupe est restreint dans le sens où il contient moins de processeurs de sécurité que ce qui est possible dans le système 2. Plus précisément, cette requête vise à savoir si le processeur 34 appartient ou non au groupe G₁. Par exemple, le groupe G₁ est constitué par l'ensemble des processeurs de sécurité dont l'identifiant UA débute par un bit à « 1 ». Ce message ECM₁ est diffusé vers l'ensemble des équipements externes raccordés au réseau 14.

Lors d'une étape 76, ce contenu multimédia multiplexé est donc reçu par le dispositif 30 et par les terminaux pirates 18 et 20.

Lors d'une étape 78, les terminaux pirates 18, 20 démultiplexent le contenu multimédia reçu pour en extraire le contenu multimédia embrouillé. Le dispositif 30 démultiplexe le contenu multimédia reçu pour en extraire le message ECM₁.

Lors d'une étape 80, le module 56 du poste 50 construit l'instant tₑ₁ d'émission du message ECM₁. L'instant tₑ₁ est enregistré dans la table 62. Par exemple, l'instant tₑ1 est construit en ajoutant au précédent instant tₑ construit la durée d'une cryptopériode.

En parallèle, lors d'une étape 82, le décodeur 32 du dispositif 30 transmet le message ECM₁ au processeur 34.

Lors d'une étape 84, en réponse à la réception de ce message ECM₁, le processeur 34 détermine si ce message comporte ou non une requête telle que la requête R₁. Dans l'affirmative, il procède à une étape 86 de calcul d'une donnée supplémentaire D et d'un délai Δ. Cette donnée D est la réponse à la requête R₁. Ici, la donnée D est une donnée booléenne puisqu'il n'existe que deux réponses possibles à la requête R₁, c'est-à-dire soit le processeur 34 appartient au groupe G₁ soit il n'appartient pas à ce groupe.

Par exemple l'étape 86 débute par une opération 88 lors de laquelle le processeur 34 détermine si son identifiant UA commence par un bit à 1. Dans l'affirmative, la donnée D est donc prise égale à 1 et, lors d'une opération 90, se voit associer une durée constante prédéterminée d₁. Dans le cas contraire, lors d'une opération 92, la donnée D, qui est prise égale à 0, se voit associer une durée constante prédéterminée d₀. Par exemple la durée d₀ est nulle et la durée d₁ est choisie supérieure à la gigue des signaux transmis par le processeur 34 vers le poste 50. La gigue est également plus connue sous le terme anglais de « jitter ». Par exemple, la durée d₁ est supérieure à 1ms. Les durées d₀ et d₁ sont les deux durées possibles d'un délai Δ.

Ensuite, à l'issue de l'étape 86 ou dans le cas où le message ECM reçu par le processeur 34 ne comporte pas de requête, il est procédé à une étape 94 de déchiffrement du cryptogramme CW*.

Lors d'une étape 96, le processeur 34 construit ultérieurement une trame contenant le mot de contrôle CW déchiffré. Cette trame est conforme à la norme ISO 7816.

Puis, lors d'une étape 98, le processeur 34 retarde la transmission, vers le décodeur 32, de la trame construite lors de l'étape 96, du délai Δ de durée d₁ ou d₀ fonction de la valeur de la donnée D calculée lors de l'étape 86.

Les deux cas qui peuvent se produire lors de l'étape 98 sont représentés plus en détails sur les chronogrammes des Figures 4 et 5 qui sont décrits plus loin.

Après avoir attendu le délai Δ, la trame est immédiatement diffusée sur le réseau 14.

Lors d'une étape 100, les terminaux pirates 18 et 20 ainsi que le poste 50 reçoivent la trame contenant le mot de contrôle déchiffré par le processeur 34.

Lors d'une étape 102, le décodeur 22 des terminaux pirates extrait le mot de contrôle CW de la trame reçue et le transmet au désembrouilleur 24 qui peut alors désembrouiller le contenu multimédia embrouillé reçu.

En parallèle, lors d'une étape 104, le poste 50 marque l'instant tᵣ₁ de réception de la trame contenant le mot de contrôle CW. Cet instant tᵣ₁ est enregistré dans la table 62 associée à l'identifiant du message ECM₁.

La phase 72 s'achève et une nouvelle phase 106 d'émission d'une nouvelle requête et de réception de la réponse correspondante débute. Cette phase 106 est identique à la phase 72 à l'exception du fait que le message ECM émis est un message ECM₂ contenant une requête R₂ qui cible un groupe G₂. Par exemple, le groupe G₂ est construit de façon à ce que l'intersection avec le groupe G₁ soit vide, et sa réunion avec le groupe G₁ corresponde à l'ensemble des processeurs de sécurité utilisables dans le système 2. Ici, le groupe G₂ est constitué par l'ensemble des processeurs dont l'identifiant UA commence par un bit à zéro. Les instants d'émission de ce message ECM2 et de réception du mot de contrôle déchiffré sont enregistrés en tant qu'instants tₑ₂ et tᵣ₂ dans la table 62.

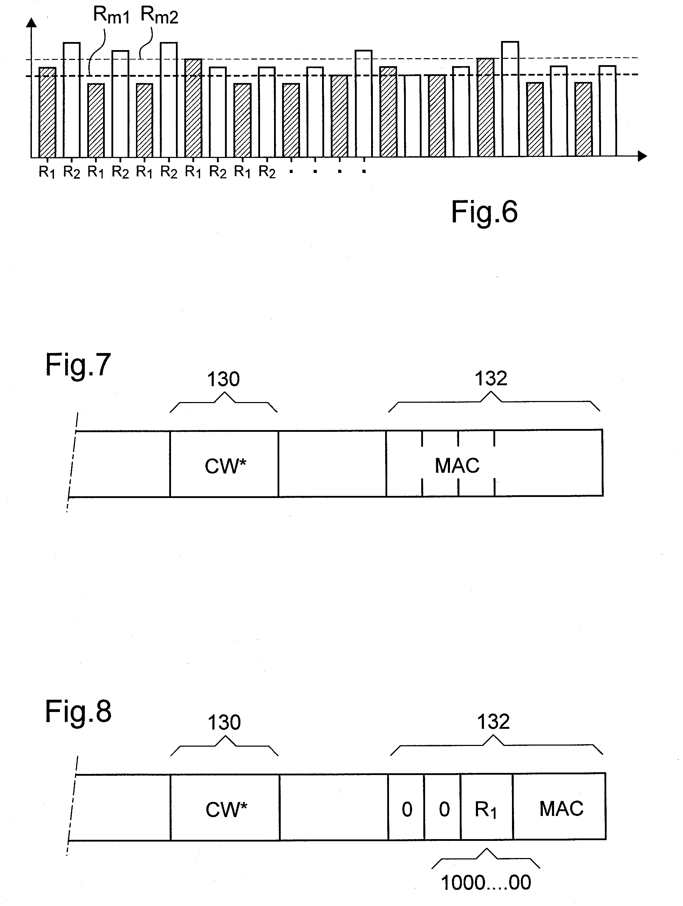

Les phases 72 et 106 sont réitérées plusieurs fois chacune. Par exemple, elles sont réitérées chacune plus de dix fois et, de préférence, plus de cent fois. Par exemple, les phases 72 et 106 sont réitérées en alternance. Cela permet d'enregistrer un grand nombre de fois les instants tₑ d'émission et tᵣ de réception correspondant aux requêtes R₁ et R₂. Ces instants sont enregistrés dans la table 62. La Figure 6 représente graphiquement une partie du contenu de la table 62 obtenu en réitérant en alternance les phases 72 et 106.

Dans ce graphique, chaque barre verticale représente le temps de réponse à une requête. Les barres hachurées représentent les temps de réponse à la requête R₁ tandis que les barres blanches représentent les temps de réponse à la requête R₂. La hauteur de chacune de ces barres est fonction du temps de réponse. Le temps de réponse est égal à la différence entre les instants tₑ et tᵣ enregistrés pour le même message ECM dans la table 62.

Comme illustré sur ce graphique, la différence entre les instants tₑ et tᵣ en réponse à la même requête varie à chaque fois que cette requête est envoyée. Cette variation est due à des aléas dans le temps de propagation du message ECM et du mot de contrôle CW diffusé déchiffré, ainsi que des messages intercalaires, c'est-à-dire échangés dans l'intervalle de temps délimité par l'échange des précédents, au travers du réseau 14. Ces variations peuvent également être dues à des aléas dans le temps de calcul du processeur 34.

Après que les phases 72 et 106 aient été réitérées un grand nombre de fois, le module 56 procède à une phase 108 d'obtention de la donnée D en traitant les instants enregistrés dans la table 62. Par exemple, lors d'une opération 110, le module 56 calcule la moyenne Rₘ₁ des temps de réponse à la requête R₁. Lors de l'étape 110, le module 56 calcule également la moyenne Rₘ₂ des temps de réponse à la requête R₂.

Ensuite, lors d'une opération 112, le module 56 détermine si le temps moyen de réponse à la requête R₁ est supérieur au temps moyen de réponse à la requête R₂. Dans l'affirmative, il procède à une opération 114 lors de laquelle il est établi que le délai Δ a pour durée d₁, et que la donnée D transmise en réponse à la requête R₁ est donc égale à 1. Dans ce cas, le poste 50 détermine que le processeur 34 appartient au groupe G₁. Dans le cas contraire, il est procédé à une opération 116 lors de laquelle il est établi que le délai Δ a pour durée d₀, et que la donnée D transmise en réponse à la requête R₁ est donc égale à 0. Cela signifie que le processeur 34 appartient au groupe G₂. En effet, comme indiqué précédemment, l'émission de la trame d'informations par le processeur 34 est retardée du délai d₁ lorsque ce processeur appartient au groupe ciblé par la requête reçue.

Les valeurs moyennes Rₘ₁ et Rₘ₂ sont représentées sur la Figure 6 par des traits horizontaux en pointillés.

A l'issue des phases 76 à 108, on a donc réussi à identifier à quel groupe G₁ ou G₂ le processeur 34 appartient. Ici le processeur 34 appartient au groupe G₂.

Ensuite, les étapes 72 à 108 sont réitérées en ciblant lors des phases 72 et 106, respectivement, des groupes G₃ et G₄. Ces groupes G₃ et G₄ sont construits de manière à ce que l'intersection de ces deux groupes soit nulle et que la réunion de ces deux groupes soit égale au groupe G₂.

Ainsi, il est possible de déterminer progressivement par recoupements successifs l'identité du processeur 34 jusqu'à arriver à l'identifier de façon unique parmi l'ensemble des processeurs utilisable dans le système 2.

La Figure 4 représente un chronogramme de l'émission et de la réception d'une réponse à une requête. A l'instant tₑₑ, le message ECM contenant la requête est émis par l'émetteur 4. Il peut exister un décalage entre les instants tₑₑ et tₑ comme représenté dans les figures 4 et 5. Ce décalage est constant. Le message contenant la requête arrive à un instant t_{Re} au dispositif 30. La différence entre les instants t_{Re} et tₑₑ correspond au temps de transport du message ECM de l'émetteur 4 jusqu'au processeur 34.

A partir de l'instant t_{Re}, le processeur 34 traite le message ECM reçu. Ce traitement se termine à l'instant t_{T}. La différence entre les instants t_{T} et t_{Re} correspond au temps de calcul nécessaire au processeur 34 pour traiter le message ECM. Ce temps de calcul comprend notamment celui du déchiffrement du cryptogramme CW* et celui de la construction ultérieure de la trame contenant le mot de contrôle CW déchiffré.

Dans le cas où le processeur 34 appartient au groupe ciblé par la requête reçue, l'émission de la trame contenant le mot de contrôle CW déchiffré est retardée du délai Δ dont la durée est calculée en fonction de la donnée D lors de l'étape 86. Après avoir attendu ce délai Δ, à l'instant t_{ec}, la trame est immédiatement transmise par le processeur 34 vers le décodeur 32. Ensuite, la trame ainsi transmise arrive à un instant t_{RC} au poste 50 d'écoute. Cet instant t_{RC} est enregistré en tant qu'instant tᵣ par le module 56. La différence entre les instants t_{RC} et t_{ec} correspond au temps de transport de cette trame du processeur 34 jusqu'au poste 50.

Les temps de transport ainsi que les temps de traitement peuvent varier de façon pseudo-aléatoire. Dans ces conditions, seul un traitement statistique des délais de réponse aux requêtes tel que décrit en regard de la phase 108 permet d'obtenir la donnée supplémentaire transmise sur le canal caché.

La Figure 5 représente le même chronogramme que la Figure 4 mais dans le cas particulier où le processeur n'appartient pas au groupe ciblé par la requête. Le délai Δ est donc nul.

Le fait de retarder l'émission d'une trame d'informations ne modifie pas le contenu ou la structure de cette trame. Ce retard est donc très difficilement perceptible par un utilisateur non averti. Ainsi, le procédé de la Figure 3 permet de transmettre de façon extrêmement discrète des données supplémentaires du processeur 34 vers un équipement externe.

Toutefois, pour que la transmission de données supplémentaires du processeur 34 vers un équipement externe reste furtive, il est également nécessaire de masquer au mieux les requêtes contenues dans les messages ECM. A cet effet, la Figure 7 représente un message ECM dépourvu de requête. Classiquement, ce message ECM comporte en outre un champ 130 contenant le cryptogramme CW* et comportant une redondance cryptographique 132 appelée MAC (pour Message Authentication Code) et codée sur 128 bits. Cette redondance cryptographique permet de vérifier l'intégrité du message ECM. Elle est typiquement construite en appliquant une fonction de hachage au contenu du message ECM et en particulier en prenant en compte le cryptogramme CW*.

La Figure 8 représente un message ECM contenant une requête. Ici, cette requête est masquée dans le champ MAC du message ECM. Par exemple, ce champ MAC débute ici par deux bits successifs à zéro. Ceci est reconnu par le processeur 34 comme indiquant la présence d'une requête dans ce champ. Ici, la requête est codée à l'aide des 62 bits suivants. Les 64 derniers bits du champ MAC contiennent alors une signature du message codée sur 64 bits au lieu de 128. Cela permet de vérifier quand même l'intégrité de ce message ECM.

La requête R₁ se présente par exemple sous la forme d'un vecteur de bits destinés à être comparés un à un aux bits de l'identifiant UA. Par exemple, ici, la requête R₁ est codée sous la forme d'une succession de 62 bits dont seul le premier bit est égal à « 1 ». Ce code est interprété par le processeur 34 comme définissant un groupe de processeurs de sécurité pour lequel le bit de poids le plus fort de l'identifiant UA est égal à « 1 ».

De préférence, le contenu du champ MAC est chiffré avec une clé connue des processeurs de sécurité. Ainsi, les processeurs déchiffrent le contenu du champ MAC avec cette clé avant d'utiliser ce contenu.

De nombreux autres modes de réalisation sont possibles. Par exemple, chaque requête peut définir une borne inférieure B_{inf} et une borne supérieure Bₛᵤₚ. Si l'identifiant UA du processeur 34 est contenu dans le segment [B_{inf} ; Bₛᵤₚ], alors la réponse D à la requête reçue est « oui » et l'émission d'une trame d'informations ultérieure est retardée d'un délai Δ de durée d₁. Dans le cas contraire, la transmission de la trame d'informations ultérieure n'est pas retardée.

Une requête peut cibler, si nécessaire, une seule carte. Dans ce cas, le groupe est restreint à un seul processeur de sécurité. Par exemple, dans ce cas, le message ECM₁ ciblera uniquement l'identifiant UA de la carte 34.

Les groupes restreints peuvent être conçus pour identifier, les uns après les autres, les bits de l'identifiant UA. Par exemple, une première requête cible les processeurs de sécurité dont le premier bit de l'identifiant UA est égale à 1. Puis une deuxième requête cible les processeurs de sécurité dont le deuxième bit de l'identifiant UA est égale à 1 et ainsi de suite. En procédant ainsi, on arrive à identifier quels sont les bits de l'identifiant UA égaux à 1 et donc le processeur de sécurité correspondant.

Le délai Δ peut prendre plus de deux valeurs différentes. Par exemple, la requête contient un vecteur de bits qui doit être combiné avec l'identifiant UA par le processeur 34. L'opération de combinaison consiste par exemple à réaliser l'opération XOR entre ce vecteur de bits et l'identifiant UA. Le résultat de cette combinaison détermine alors la valeur du délai Δ à utiliser pour retarder l'émission de la trame d'informations. Ensuite, lors de la phase 106, un autre vecteur est utilisé. La réitération des phases 72 et 106 pour un grand nombre de vecteurs différents permet, ensuite, par un traitement d'identifier ou de cerner plus précisément l'identité du processeur 34.

Même si le délai Δ est limité à deux valeurs possibles, il n'est pas nécessaire que l'une de ces valeurs soit nulle.

En variante, le dispositif 30 peut utiliser plusieurs processeurs de sécurité authentiques pour déchiffrer les cryptogrammes CW*. On suppose que le mot de contrôle déchiffré est uniquement diffusé par le processeur de sécurité qui a été le plus rapide à déchiffrer le cryptogramme CW*. Les trames transmises par les autres processeurs de sécurité qui ont été plus lents ne sont pas diffusées vers le poste d'écoute. Dans ce cas, il est possible de construire une stratégie permettant d'identifier chacun des processeurs de sécurité utilisés par le dispositif 30 de partage de mot de contrôle. Par exemple, au cas où le dispositif 30 utilise deux processeurs de sécurité différents, on crée au moins trois groupes G₁, G₂, G₃ telle que l'union deux à deux de ces groupes corresponde à l'ensemble des processeurs de sécurité utilisés dans le système 2. Ceci permet d'identifier au moins un groupe et au plus deux groupes auxquels les processeurs de sécurité appartiennent. On peut donc délimiter ensuite un ensemble plus restreint auquel les deux processeurs de sécurité appartiennent. En divisant de nouveau cet ensemble plus restreint en trois groupes de façon similaire et en identifiant le ou les groupes auxquels les processeurs partagés appartiennent, on arrive petit à petit à identifier les deux processeurs de sécurité utilisés par le dispositif 30. Par exemple, on suppose que le système 2 comprend neuf processeurs de sécurité numérotés de 1 à 9. Les processeurs 1 et 5 sont utilisés par le dispositif 30. Initialement, on crée les trois groupes suivants :
- le groupe G₁ qui regroupe tous les processeurs sauf les processeurs 1 à 3;
- le groupe G₂ qui regroupe tous les processeurs sauf les processeurs 4 à 6, et
- le groupe G₃ qui regroupe tous les processeurs sauf les processeurs 7 à 9.

Ensuite, les phases 72, 106 et 108 sont mises en œuvre pour identifier à quel groupe appartiennent les processeurs utilisés par le dispositif 30. Etant donné que l'on ne retarde pas l'émission du mot de contrôle par le processeur de sécurité qui n'appartient pas au groupe ciblé par la requête reçue, cette réponse est diffusée avant celle du processeur qui appartient au groupe ciblé. Dans ces conditions, le poste d'écoute reçoit uniquement la réponse du processeur qui n'appartient pas au groupe ciblé. Dès lors, pour que le poste 50 reçoive une réponse qui lui indique que les processeurs appartiennent au groupe ciblé, il faut que les deux processeurs appartiennent simultanément à ce groupe. Lorsque les requêtes ciblent les groupes G₁ et G₂, la réponse reçue est « non ». Par contre, lorsque la requête cible le groupe G₃, la réponse reçue est « oui », c'est-à-dire que les processeurs ciblés appartiennent à ce groupe G₃.

Ensuite, on partage le groupe G₃ en trois nouveaux groupes G₄, G₅ et G₆. Les groupes G₄, G₅ et G₆ regroupent, respectivement, les processeurs 1 2 3 4, 1 2 5 6 et 3 4 5 6.

En réitérant les étapes 72 à 108 en utilisant cette répartition en groupes, le poste 50 détermine que les processeurs utilisés par le dispositif 30 appartiennent au groupe G₅. Ensuite le groupe G₅ est divisé en trois groupes G₇, G₈ et G₉ correspondant, respectivement, aux processeurs 1 2 5, 2 5 6 et 1 5 6. Après diffusion des requêtes correspondantes et traitement des réponses, le poste 50 détermine que les processeurs utilisés par le dispositif 30 appartiennent aux groupe G₇ et G₉. Les processeurs partagés sont donc les processeurs 1 et 5.

Il existe également de nombreuses autres possibilités pour masquer les requêtes dans les messages ECM transmis au processeur de sécurité. Par exemple, plutôt que de transmettre un vecteur de bits à l'intérieur du champ MAC, on utilise le contenu du champ 130 ou du champ 132 comme vecteur de bits. On peut également utilisé le mot de contrôle CW déchiffré par le processeur de sécurité comme vecteur de bits. Ensuite, ce vecteur de bits est combiné à l'identifiant UA du processeur de sécurité. Par exemple, cette combinaison est réalisée à l'aide d'une opération XOR. Le résultat de cette combinaison est codé sous la forme d'un délai utilisé pour retarder l'émission de la trame d'informations contenant le mot de contrôle CW déchiffré. Par exemple, ce délai est égal au résultat de la combinaison entre le vecteur et l'identifiant UA. On réitère ces opérations sur un grand nombre de vecteurs différents. Les réponses à chaque ECM envoyé sont enregistrées dans la table d'écoute. Ensuite, lorsque le nombre d'informations est statistiquement suffisant, la table d'écoute est traitée pour essayer de déterminer le plus précisément possible la valeur de l'identifiant UA du processeur utilisé par le dispositif 30. Dans ce mode de réalisation, puisque le vecteur remplit également une autre fonction (cryptogramme du mot de contrôle, redondance cryptographique, ...) d'un champ du message ECM, celui-ci est plus difficilement détectable.

Pour masquer les requêtes, une autre solution consiste à ne tout simplement pas envoyer de requête. Dans ces modes de réalisation, la transmission de la donnée supplémentaire est par exemple déclenchée à heure fixe chaque jour. Une autre possibilité consiste à déclencher la transmission de cette donnée supplémentaire à un instant qui est déterminée par le processeur de sécurité en fonction de la donnée supplémentaire à transmettre. Ainsi, la donnée à transmettre est également codée par l'instant auquel elle est transmise.

Pour limiter le nombre de requêtes transmises au processeur de sécurité, une requête est d'abord transmise, puis le délai Δ correspondant à la donnée D à transmettre en réponse à cette requête est appliqué systématiquement au retardement de plusieurs trames d'informations ultérieures prédéterminées. Par exemple, toutes les trames d'informations émises pendant un intervalle de temps prédéterminé après la réception de cette requête sont retardées par le délai Δ sans que ce retard sur les trames suivantes soit déclenché par la réception d'une nouvelle requête.

Pour rendre le délai appliqué à la transmission de la trame d'informations encore plus difficilement perceptible, il est possible de procéder comme suit : des groupes de plusieurs délais possibles sont construits. Par exemple, des groupes J₁ et J₂ correspondant, respectivement, à des plages [n₁₁ ; n₁₂] et [n₂₁ ; n22] de délais possibles sont construits. Les groupes J₁ et J₂ sont distincts et, de préférence, leur intersection est vide. Ensuite, le groupe dans lequel doit être choisi le délai Δ est déterminé en fonction de la donnée D. Enfin, le délai Δ à utiliser pour retarder la transmission de la trame d'informations est tiré de façon aléatoire dans le groupe précédemment déterminé. Ainsi, suite à une même requête, le délai utilisé pour retarder la transmission d'une trame d'informations ultérieure ne sera pas identique. Par contre, le poste d'écoute peut discriminer entre l'appartenance du délai au groupe J₁ ou J₂ et donc obtenir la donnée D.

Si le temps de transport des trames d'informations entre le processeur de sécurité et le poste d'écoute et si le temps de calcul ou de traitement du message ECM sont constants, il n'est pas nécessaire de réitérer plusieurs fois les phases 72 et 106 pour obtenir la donnée D. Une seule mesure du délai Δ est suffisante.

Dans une variante, pour une donnée particulière, le délai Δ à utiliser est un délai infini, ce qui correspond à annuler la transmission de la trame d'informations.

Il est possible dans un premier temps d'enregistrer l'ensemble des délais de réponse aux requêtes dans la table 62 puis, dans un second temps, de traiter cette table ultérieurement lorsque cela est devenu nécessaire, par exemple, pour identifier un processeur de sécurité.

La réponse à une requête n'a pas besoin d'être transmise immédiatement en retardant ou non la transmission de la prochaine trame d'informations. Par exemple, le délai Δ est utilisé uniquement pour retarder la transmission de la n-ième trame d'informations transmise par le processeur de sécurité après la réception de la requête, où n est strictement supérieur à un. Les trames intercalaires, c'est-à-dire de la trame immédiatement consécutive à la réception de la requête à la (n-1)-ième trame ne sont pas utilisées pour coder la réponse à la requête.

La réponse transmise par le processeur de sécurité n'est pas nécessairement transmise à l'aide d'une seule trame d'informations. Par exemple, la réponse à une requête est formée de plusieurs données, chaque donnée correspondant à une valeur particulière du délai Δ. Dans ce cas, plusieurs trames d'informations sont nécessaires pour transmettre la réponse complète. Ainsi, une seule requête peut déclencher l'envoie sur le canal caché de plusieurs données.

La transmission furtive de données supplémentaires telle que décrite ici en regard du procédé de la Figure 3 peut être appliquée dans d'autres contextes que celui du traçage de traîtres. Par exemple, la donnée supplémentaire transmise peut correspondre à d'autres données que des données relatives à l'identifiant UA du processeur de sécurité. Le retard peut être également appliqué à d'autres trames d'informations que celles contenant le mot de contrôle CW déchiffré.

Les requêtes transmises au processeur de sécurité peuvent être incorporées dans d'autres messages que les messages ECM. Par exemple, ces requêtes sont incorporées dans des messages EMM.

Le processeur de sécurité peut être intégré ou simplement connecté de façon amovible au désembrouilleur. Le désembrouilleur peut lui-même être intégré ou connecté de façon amovible au décodeur.

Le réseau utilisé pour diffuser le contenu multimédia multiplexé peut également être un réseau satellitaire.

Il n'est pas nécessaire que le poste 50 d'écoute comporte un décodeur dans le cas particulier décrit en regard des figures 1 et 3.

Le procédé de traçage de traîtres décrit en regard de la Figure 3 s'applique également à des attaques connues sous le nom de « partage de carte ». Dans ces attaques, chaque terminal pirate transmet le message ECM qu'il reçoit au dispositif 30 qui le traite à l'aide du processeur 34 et lui renvoie la réponse correspondante. Dans ce cas, le poste 50 d'écoute reçoit également le contenu multimédia multiplexé et le démultiplexe pour en extraire le message ECM à l'aide du décodeur 54. Ensuite, il envoie le message ECM extrait au dispositif 30. Ultérieurement, le dispositif 30 transmet, au poste 50, le mot de contrôle obtenu par le processeur 34 en déchiffrant le cryptogramme CW* contenu dans ce message ECM. Puisque le poste 50 envoie lui-même le message ECM au dispositif 30 il peut directement mesurer l'instant tₑ d'émission de ce message. Par exemple, l'instant tₑ est pris égale à l'instant de réception du message ECM par le poste 50. En variante, l'instant tₑ est contenu dans le message ECM lui-même.

Enfin, la mise en œuvre du canal caché telle que décrite ici peut également être adaptée pour transmettre de façon furtive des données supplémentaires d'un équipement externe vers le processeur de sécurité. Pour cela, il suffit d'appliquer ce qui a été décrit précédemment en inversant les rôles de l'équipement externe et du processeur de sécurité. Par exemple, un tel canal caché pourrait être utilisé par l'émetteur 4 et/ou l'équipement externe 32 pour transmettre de façon furtive les requêtes.

## Revendications

1. Procédé de transmission, par l'intermédiaire d'une liaison asynchrone, d'une trame d'informations et d'une donnée supplémentaire d'un processeur de sécurité vers un équipement externe, la trame d'informations se composant d'un motif particulier de bits signalant le début de la trame et d'un autre motif particulier de bits signalant la fin de la trame et la donnée supplémentaire étant une donnée envoyée à l'équipement externe en plus de celles contenues dans la trame d'informations, dans lequel :
a) en réponse à la réception d'une requête, le processeur de sécurité calcule (86) la valeur de la donnée supplémentaire, cette donnée supplémentaire étant une réponse à la requête choisie parmi au moins deux réponses possibles à la requête,
b) le processeur de sécurité calcule (86) un délai en fonction de la valeur de cette donnée supplémentaire calculée lors de l'étape a), et
c) le processeur de sécurité retarde (98) le début de la transmission de la trame d'informations, du processeur de sécurité vers l'équipement externe, d'une durée égale au délai calculé lors de l'étape b) pour réaliser la transmission de la donnée supplémentaire, puis transmet la trame d'informations vers l'équipement externe.

2. Procédé selon la revendication 1, dans lequel le procédé comprend le déchiffrement (94) par le processeur de sécurité d'une information confidentielle et l'encapsulation (96) de cette information confidentielle déchiffrée dans la trame d'informations retardée.

3. Procédé selon la revendication 2, dans lequel l'information confidentielle est un mot de contrôle permettant de déchiffrer un contenu multimédia embrouillé.

4. Procédé selon l'une quelconque des revendications précédentes, dans lequel le procédé comprend :
- le choix d'un groupe de délais possibles en fonction de la valeur de la donnée supplémentaire parmi plusieurs groupes différents de délais possibles,
- le tirage aléatoire du délai utilisé pour retarder le début de la transmission de la trame d'informations uniquement dans le groupe choisi en fonction de la valeur de la donnée supplémentaire.

5. Procédé selon l'une quelconque des revendications précédentes, dans lequel pour une valeur prédéterminée de la donnée supplémentaire, la transmission de la trame d'informations vers l'équipement externe est annulée.

6. Procédé selon l'une quelconque des revendications précédentes, dans lequel le procédé comprend :
- la détermination (98) du délai à appliquer pour retarder le début de la transmission de la trame d'informations en fonction de la valeur de la donnée supplémentaire, et
- l'utilisation de délais fonctions de la même valeur de la donnée supplémentaire pour retarder systématiquement le début de la transmission de plusieurs trames d'informations prédéterminées.

7. Procédé selon l'une quelconque des revendications précédentes, dans lequel la trame d'informations, dont le début de la transmission est retardé, est choisie en fonction de la valeur de la donnée supplémentaire à transmettre.

8. Procédé selon l'une quelconque des revendications précédentes, dans lequel le procédé comprend la construction de la trame d'informations indépendamment de la donnée supplémentaire.

9. Procédé de réception par un équipement externe d'une donnée supplémentaire transmise par un processeur de sécurité à l'aide d'un procédé conforme à l'une quelconque des revendications précédentes, **caractérisé en ce que** le procédé comporte :
- la réception (100) d'une trame d'informations transmise par le processeur de sécurité à l'aide d'un procédé conforme à l'une quelconque des revendications précédentes, et
- l'obtention (108) de la valeur de la donnée supplémentaire transmise à partir du délai utilisé pour retarder la trame d'informations :
- en construisant (80) un instant d'émission de la requête,
- en marquant (104) l'instant de réception de la trame d'informations transmise en réponse à la requête, et
- en obtenant (108) la valeur de la donnée supplémentaire à partir de la différence entre l'instant de réception marqué et l'instant d'émission construit.

10. Procédé selon la revendication 9 destiné à être mis en œuvre lorsque chaque donnée supplémentaire est transmise en réponse à une requête, ces requêtes étant transmises à intervalle prédéterminé, dans lequel ce procédé comporte la construction (80) de l'instant d'émission de la requête en fonction de l'intervalle prédéterminé.

11. Procédé d'identification d'un processeur de sécurité, ce procédé comportant :
- la transmission (98), par le processeur de sécurité, d'une donnée d'identification fonction d'un identifiant de ce processeur de sécurité, vers un équipement externe, l'identifiant du processeur de sécurité permettant d'identifier de façon unique ce processeur de sécurité parmi l'ensemble des processeurs de sécurité susceptibles d'être utilisés,
- la réception (104), par l'équipement externe, de la donnée d'identification transmise, et
- la détermination (114, 116) d'un groupe restreint d'identifiants possibles pour ce processeur de sécurité à partir de cette donnée d'identification ;
**caractérisé en ce que** la transmission par le processeur de sécurité de la donnée d'identification est réalisée à l'aide d'un procédé de transmission conforme à l'une quelconque des revendications 1 à 8.

12. Procédé selon la revendication 11, dans lequel la réception de la donnée d'identification est réalisée à l'aide d'un procédé de réception conforme à la revendication 10.

13. Procédé de transmission, par l'intermédiaire d'une liaison asynchrone, par un équipement externe vers un processeur de sécurité, d'une trame d'informations et d'une donnée supplémentaire, la trame d'informations se composant d'un motif particulier de bits signalant le début de la trame et d'un autre motif particulier de bits signalant la fin de la trame et la donnée supplémentaire étant une donnée envoyée au processeur de sécurité en plus de celles contenues dans la trame d'informations, dans lequel :
a) en réponse à la réception d'une requête, l'équipement externe calcule la valeur de la donnée supplémentaire, cette donnée supplémentaire étant une réponse à la requête choisie parmi au moins deux réponses possibles à la requête,
b) l'équipement externe calcule un délai en fonction de la valeur de cette donnée supplémentaire calculée lors de l'étape a), et
c) l'équipement externe retarde (98) le début de la transmission de la trame d'informations, de l'équipement externe vers le processeur de sécurité, d'une durée égale au délai calculé lors de l'étape b) pour réaliser la transmission de la donnée supplémentaire, puis transmet la trame d'informations vers le processeur de sécurité.

14. Processeur de sécurité comportant un module (40) de transmission, par l'intermédiaire d'une liaison asynchrone, d'une trame d'informations et d'une donnée supplémentaire vers un équipement externe, la trame d'informations se composant d'un motif particulier de bits signalant le début de la trame et d'un autre motif particulier de bits signalant la fin de la trame et la donnée supplémentaire étant une donnée envoyée à l'équipement externe en plus de celles contenues dans la trame d'informations, **caractérisé en ce que** ce module (40) de transmission est apte à réaliser :
a) en réponse à la réception d'une requête, le calcul (86) de la valeur de la donnée supplémentaire, cette donnée supplémentaire étant une réponse à la requête choisie parmi au moins deux réponses possibles à la requête,
b) le calcul (86) d'un délai en fonction de la valeur de cette donnée supplémentaire calculée lors de l'étape a), et
c) le retard (98) du début de la transmission de la trame d'informations, du processeur de sécurité vers l'équipement externe, d'une durée égale au délai calculé lors de l'étape b) pour réaliser la transmission de la donnée supplémentaire, puis la transmission de la trame d'informations vers l'équipement externe.

15. Support d'enregistrement d'informations, **caractérisé en ce qu'**il comporte des instructions pour l'exécution d'un procédé conforme à l'une quelconque des revendications 1 à 13, lorsque ces instructions sont exécutées par un calculateur électronique.

## Patentansprüche

1. Verfahren zum Senden, über eine asynchrone Verbindung, eines Informationsrahmens und eines zusätzlichen Datenelements von einem Sicherheitsprozessor an ein externes Gerät, wobei der Informationsrahmen aus einem bestimmten Bitmuster, das den Anfang des Rahmens kennzeichnet, und einem anderen bestimmten Bitmuster, das das Ende des Rahmens kennzeichnet, besteht und das zusätzliche Datenelement ein Datenelement ist, das zusätzlich zu den in dem Informationsrahmen enthaltenen Datenelementen an das externe Gerät geschickt wird, wobei:
a) der Sicherheitsprozessor als Reaktion auf den Empfang einer Anfrage den Wert des zusätzlichen Datenelements berechnet (86), wobei dieses zusätzliche Datenelement eine Antwort auf die Anfrage ist, die aus mindestens zwei möglichen Antworten auf die Anfrage gewählt wird,
b) der Sicherheitsprozessor in Abhängigkeit von dem in Schritt a) berechneten Wert dieses zusätzlichen Datenelements eine Zeitspanne berechnet (86) und
c) der Sicherheitsprozessor den Anfang des Sendens des Informationsrahmens von dem Sicherheitsprozessor an das externe Gerät um eine Dauer verzögert (98), die gleich der in Schritt b) berechneten Zeitspanne ist, um das Senden des zusätzlichen Datenelements durchzuführen, und dann den Informationsrahmen an das externe Gerät sendet.

2. Verfahren nach Anspruch 1, wobei das Verfahren das Entschlüsseln (94), durch den Sicherheitsprozessor, einer vertraulichen Information und das Verkapseln (96) dieser entschlüsselten vertraulichen Information in dem verzögerten Informationsrahmen beinhaltet.

3. Verfahren nach Anspruch 2, wobei die vertrauliche Information ein Steuerwort ist, das es ermöglicht, gescrambelte Multimedia-Inhalte zu entschlüsseln.

4. Verfahren nach einem der vorhergehenden Ansprüche, wobei das Verfahren Folgendes beinhaltet:
- Wählen, in Abhängigkeit von dem Wert des zusätzlichen Datenelements, einer Gruppe von möglichen Zeitspannen aus mehreren unterschiedlichen Gruppen von möglichen Zeitspannen,
- zufälliges Auswählen der verwendeten Zeitspanne, um den Anfang des Sendens des Informationsrahmens zu verzögern, ausschließlich aus der in Abhängigkeit von dem Wert des zusätzlichen Datenelements gewählten Gruppe.

5. Verfahren nach einem der vorhergehenden Ansprüche, wobei das Senden des Informationsrahmens an das externe Gerät bei einem vorgegebenen Wert des zusätzlichen Datenelements annulliert wird.

6. Verfahren nach einem der vorhergehenden Ansprüche, wobei das Verfahren Folgendes beinhaltet:
- Bestimmen (98) der Zeitspanne, die beim Verzögern des Anfangs des Sendens des Informationsrahmens angewendet werden soll, in Abhängigkeit von dem Wert des zusätzlichen Datenelements und
- Verwenden von Zeitspannen, die von demselben Wert des zusätzlichen Datenelements abhängen, um den Anfang des Sendens von mehreren vorgegebenen Informationsrahmen systematisch zu verzögern.

7. Verfahren nach einem der vorhergehenden Ansprüche, wobei der Informationsrahmen, bei dem der Anfang des Sendens verzögert wird, in Abhängigkeit von dem Wert des zu sendenden zusätzlichen Datenelements gewählt wird.

8. Verfahren nach einem der vorhergehenden Ansprüche, wobei das Verfahren das Bilden des Informationsrahmens unabhängig von dem zusätzlichen Datenelement beinhaltet.

9. Verfahren zum Empfangen, durch ein externes Gerät, eines zusätzlichen Datenelements, das von einem Sicherheitsprozessor mit Hilfe eines Verfahrens nach einem der vorhergehenden Ansprüche gesendet wird, **dadurch gekennzeichnet, dass** das Verfahren Folgendes umfasst:
- Empfangen (100) eines Informationsrahmens, der von dem Sicherheitsprozessor mit Hilfe eines Verfahrens nach einem der vorhergehenden Ansprüche gesendet wird, und
- Erhalten (108) des Werts des gesendeten zusätzlichen Datenelements auf Grundlage der für das Verzögern des Informationsrahmens verwendeten Zeitspanne:
- durch Bilden (80) eines Entsendungszeitpunkts der Anfrage,
- durch Feststellen (104) des Empfangszeitpunkts des als Reaktion auf die Anfrage gesendeten Informationsrahmens und
- durch Erhalten (108) des Werts des zusätzlichen Datenelements auf Grundlage der Differenz zwischen dem festgestellten Empfangszeitpunkt und dem gebildeten Entsendungszeitpunkt.

10. Verfahren nach Anspruch 9, das zur Umsetzung vorgesehen ist, wenn jedes zusätzliche Datenelement als Reaktion auf eine Anfrage gesendet wird, wobei diese Anfragen in einem vorgegebenen Intervall gesendet werden, wobei dieses Verfahren das Bilden (80) des Entsendungszeitpunkts der Anfrage in Abhängigkeit von dem vorgegebenen Intervall umfasst.

11. Verfahren zum Identifizieren eines Sicherheitsprozessors, wobei dieses Verfahren Folgendes umfasst:
- Senden (98), durch den Sicherheitsprozessor an ein externes Gerät, eines Identifizierungsdatenelements, das von einem Identifikator dieses Sicherheitsprozessors abhängt, wobei es der Identifikator des Sicherheitsprozessors gestattet, diesen Sicherheitsprozessor unter allen Sicherheitsprozessoren, die verwendet werden können, eindeutig zu identifizieren,
- Empfangen (104), durch das externe Gerät, des gesendeten Identifizierungsdatenelements und
- Bestimmen (114, 116) einer begrenzten Gruppe von möglichen Identifikatoren für diesen Sicherheitsprozessor auf Grundlage dieses Identifizierungsdatenelements; **dadurch gekennzeichnet, dass** das Senden, durch den Sicherheitsprozessor, des Identifizierungsdatenelements mit Hilfe eines Sendeverfahrens nach einem der Ansprüche 1 bis 8 durchgeführt wird.

12. Verfahren nach Anspruch 11, wobei das Empfangen des Identifizierungsdatenelements mit Hilfe eines Empfangsverfahrens nach Anspruch 10 durchgeführt wird.

13. Verfahren zum Senden, durch ein externes Gerät an einen Sicherheitsprozessor, eines Informationsrahmens und eines zusätzlichen Datenelements über eine asynchrone Verbindung, wobei der Informationsrahmen aus einem bestimmten Bitmuster, das den Anfang des Rahmens kennzeichnet, und einem anderen bestimmten Bitmuster, das das Ende des Rahmens kennzeichnet, besteht und das zusätzliche Datenelement ein Datenelement ist, das zusätzlich zu den in dem Informationsrahmen enthaltenen Datenelementen an den Sicherheitsprozessor geschickt wird, wobei:
a) das externe Gerät als Reaktion auf den Empfang einer Anfrage den Wert des zusätzlichen Datenelements berechnet, wobei dieses zusätzliche Datenelement eine Antwort auf die Anfrage ist, die aus mindestens zwei möglichen Antworten auf die Anfrage gewählt wird,
b) das externe Gerät in Abhängigkeit von dem in Schritt a) berechneten Wert dieses zusätzlichen Datenelements eine Zeitspanne berechnet und
c) das externe Gerät den Anfang des Sendens des Informationsrahmens von dem externen Gerät an den Sicherheitsprozessor um eine Dauer verzögert (98), die gleich der in Schritt b) berechneten Zeitspanne ist, um das Senden des zusätzlichen Datenelements durchzuführen, und dann den Informationsrahmen an den Sicherheitsprozessor sendet.

14. Sicherheitsprozessor, beinhaltend ein Modul (40) zum Senden, über eine asynchrone Verbindung, eines Informationsrahmens und eines zusätzlichen Datenelements an ein externes Gerät, wobei der Informationsrahmen aus einem bestimmten Bitmuster, das den Anfang des Rahmens kennzeichnet, und einem anderen bestimmten Bitmuster, das das Ende des Rahmens kennzeichnet, besteht und das zusätzliche Datenelement ein Datenelement ist, das zusätzlich zu den in dem Informationsrahmen enthaltenen Datenelementen an das externe Gerät geschickt wird, **dadurch gekennzeichnet, dass** dieses Sendemodul (40) Folgendes durchführen kann:
a) Berechnen (86), als Reaktion auf den Empfang einer Anfrage, des Werts des zusätzlichen Datenelements, wobei dieses zusätzliche Datenelement eine Antwort auf die Anfrage ist, die aus mindestens zwei möglichen Antworten auf die Anfrage gewählt wird,
b) Berechnen (86) einer Zeitspanne in Abhängigkeit von dem in Schritt a) berechneten Wert dieses zusätzlichen Datenelements und
c) Verzögern (98) des Anfangs des Sendens des Informationsrahmens von dem Sicherheitsprozessor an das externe Gerät um eine Dauer, die gleich der in Schritt b) berechneten Zeitspanne ist, um das Senden des zusätzlichen Datenelements durchzuführen, und dann Senden des Informationsrahmens an das externe Gerät.

15. Informationsaufzeichnungsmedium, **dadurch gekennzeichnet, dass** es Anweisungen zum Ausführen eines Verfahrens nach einem der Ansprüche 1 bis 13 umfasst, wenn diese Anweisungen von einem elektronischen Rechner ausgeführt werden.

## Claims

1. Method for transmitting, via an asynchronous link, a frame of information and an additional item of data from a security processor to an external device, the frame of information being made up of a particular pattern of bits signalling the beginning of the frame and another particular pattern of bits signalling the end of the frame and the additional item of data being an item of data sent to the external device in addition to those contained in the frame of information, wherein:
a) in response to receiving a request, the security processor calculates (86) the value of the additional item of data, this additional item of data being a response to the request chosen from at least two possible responses to the request;
b) the security processor calculates (86) a delay according to the value of this additional item of data calculated in step a); and
c) the security processor delays (98) the beginning of transmission of the frame of information, from the security processor to the external device, by a duration that is equal to the delay calculated in step b) for transmitting the additional item of data, then transmits the frame of information to the external device.

2. Method according to Claim 1, wherein the method comprises decrypting (94), by means of the security processor, confidential information and encapsulating (96) this decrypted confidential information in the delayed frame of information.

3. Method according to Claim 2, wherein the confidential information is a control word allowing scrambled multimedia content to be decrypted.

4. Method according to any one of the preceding claims, wherein the method comprises:
- choosing a group of possible delays according to the value of the additional item of data from a plurality of different groups of possible delays;
- randomly selecting the delay used to delay the beginning of transmission of the frame of information only from the group chosen according to the value of the additional item of data.

5. Method according to any one of the preceding claims, wherein, for a predetermined value of the additional item of data, the transmission of the frame of information to the external device is cancelled.

6. Method according to any one of the preceding claims, wherein the method comprises:
- determining (98) the delay to be applied to delay the beginning of transmission of the frame of information according to the value of the additional item of data; and
- using delays that are in accordance with the same value of the additional item of data to systematically delay the beginning of transmission of a plurality of predetermined frames of information.

7. Method according to any one of the preceding claims, wherein the frame of information, the beginning of transmission of which has been delayed, is chosen according to the value of the additional item of data to be transmitted.

8. Method according to any one of the preceding claims, wherein the method comprises constructing the frame of information independently of the additional item of data.

9. Method for receiving, via an external device, an additional item of data transmitted by a security processor using a method according to any one of the preceding claims, **characterized in that** the method includes:
- receiving (100) a frame of information transmitted by the security processor using a method according to any one of the preceding claims; and
- obtaining (108) the value of the additional item of data transmitted on the basis of the delay used to delay the frame of information:
- by constructing (80) a time of transmission of the request;
- by marking (104) the time at which the frame of information transmitted in response to the request is received; and
- by obtaining (108) the value of the additional item of data on the basis of the difference between the marked time of receipt and the constructed time of transmission.

10. Method according to Claim 9 which is intended to be implemented when each additional item of data is transmitted in response to a request, these requests being transmitted at predetermined intervals, wherein this method includes constructing (80) the time of transmission of the request according to the predetermined interval.

11. Method for identifying a security processor, this method including:
- transmitting (98), by means of the security processor, an item of identification data in accordance with an identifier for this security processor to an external device, the identifier for the security processor allowing this security processor to be uniquely identified from among all of the security processors that might be used;
- receiving (104), by means of the external device, the item of identification data transmitted; and
- determining (114, 116) a restricted group of possible identifiers for this security processor on the basis of this item of identification data,
**characterized in that** the item of identification data is transmitted by the security processor using a transmission method according to any one of Claims 1 to 8.

12. Method according to Claim 11, wherein the item of identification data is received using a reception method according to Claim 10.

13. Method for transmitting, via an asynchronous link, from an external device to a security processor, a frame of information and an additional item of data, the frame of information being made up of a particular pattern of bits signalling the beginning of the frame and another particular pattern of bits signalling the end of the frame and the additional item of data being an item of data sent to the security processor in addition to those contained in the frame of information, wherein:
a) in response to receiving a request, the external device calculates the value of the additional item of data, this additional item of data being a response to the request chosen from at least two possible responses to the request;
b) the external device calculates a delay according to the value of this additional item of data calculated in step a); and
c) the external device delays (98) the beginning of transmission of the frame of information, from the external device to the security processor, by a duration that is equal to the delay calculated in step b) for transmitting the additional item of data, then transmits the frame of information to the security processor.

14. Security processor including a module (40) for transmitting, via an asynchronous link, a frame of information and an additional item of data to an external device, the frame of information being made up of a particular pattern of bits signalling the beginning of the frame and another particular pattern of bits signalling the end of the frame and the additional item of data being an item of data sent to the external device in addition to those contained in the frame of information, **characterized in that** the transmission module (40) is capable of:
a) in response to receiving a request, calculating (86) the value of the additional item of data, this additional item of data being a response to the request chosen from at least two possible responses to the request;
b) calculating (86) a delay according to the value of this additional item of data calculated in step a); and
c) delaying (98) the beginning of transmission of the frame of information, from the security processor to the external device, by a duration that is equal to the delay calculated in step b) for transmitting the additional item of data, then transmitting the frame of information to the external device.

15. Information storage medium, **characterized in that** it includes instructions for executing a method according to any one of Claims 1 to 13 when these instructions are run by an electronic computer.
